(19) Europäisches Patentamt
European Patent Office
Office européen des brevets

(11) EP 3 535 048 B1

(12) **EUROPEAN PATENT SPECIFICATION**

(45) Date of publication and mention of the grant of the patent:
**15.02.2023 Bulletin 2023/07**

(21) Application number: **17784458.6**

(22) Date of filing: **25.09.2017**

(51) International Patent Classification (IPC):
***B01D 67/00*** *(1990.01)* ***B01D 69/08*** *(1990.01)*
***B01D 71/46*** *(1990.01)* ***B01D 71/52*** *(1990.01)*
***B01D 71/64*** *(1990.01)* ***B01D 69/02*** *(1990.01)*
***C08L 63/00*** *(1974.07)* ***C08L 79/08*** *(1974.07)*
***B01D 53/22*** *(1968.09)* ***C08G 73/10*** *(1974.07)*

(52) Cooperative Patent Classification (CPC):
(C-Sets available)
**B01D 71/64; B01D 53/22; B01D 53/228; B01D 67/0009; B01D 67/0011; B01D 67/0013; B01D 69/02; B01D 69/08; B01D 71/46; B01D 71/52; C08G 73/1039; C08G 73/1042; C08G 73/1067; C08L 79/08;** B01D 2256/16;

(Cont.)

(86) International application number:
**PCT/US2017/053151**

(87) International publication number:
**WO 2018/084958 (11.05.2018 Gazette 2018/19)**

(54) **USE OF HYDROCARBONS TO IMPROVE THE PROPERTIES OF HALOGEN-CONTAINING POLYIMIDE MEMBRANES**

VERWENDUNG VON HYDROKARBONEN ZUR VERBESSERUNG DER EIGENSCHAFTEN VON HALOGENHALTIGEN POLYIMID-MEMBRANEN

UTILISATION DES HYDROCARBURES POUR AMÉLIORER LES PROPRIÉTÉS DES MEMBRANES POLYIMIDES HALOGÉNÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2016 US 201662417557 P**

(43) Date of publication of application:
**11.09.2019 Bulletin 2019/37**

(60) Divisional application:
**22181809.9 / 4 085 992**

(73) Proprietors:
- **Dow Global Technologies LLC**
  **Midland, MI 48674 (US)**
- **Georgia Tech Research Corporation**
  **Atlanta, GA 30332 (US)**

(72) Inventors:
- **XU, Liren**
  **Midland,**
  **MI 48674 (US)**
- **VAUGHN, Justin T.**
  **Medford, MA 02155 (US)**
- **QIU, Wulin**
  **Snellville, Georgia 30078 (US)**
- **KOROS, William J.**
  **Atlanta, GA 30327 (US)**
- **BRAYDEN, Mark M.**
  **Plaquemine, LA 70765 (US)**
- **MARTINEZ, Marcos V.**
  **Freeport, TX 77541 (US)**

(74) Representative: **Boult Wade Tennant LLP**
**Salisbury Square House**
**8 Salisbury Square**
**London EC4Y 8AP (GB)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
**US-A- 4 880 442** **US-A- 4 983 191**
**US-A- 5 266 100** **US-A- 5 868 992**

- **SEMENOVA S I: "Polymer membranes for hydrocarbon separation and removal", JOURNAL OF MEMBRANE SCI, ELSEVIER BV, NL, vol. 231, no. 1-2, 1 March 2004 (2004-03-01), pages 189-207, XP004490575, ISSN: 0376-7388, DOI: 10.1016/J.MEMSCI.2003.11.022**
- **LILI CUI ET AL: "Physical aging of 6FDA-based polyimide membranes monitored by gas permeability", POLYMER, ELSEVIER SCIENCE PUBLISHERS B.V, GB, vol. 52, no. 15, 26 May 2011 (2011-05-26), pages 3374-3380, XP028257737, ISSN: 0032-3861, DOI: 10.1016/J.POLYMER.2011.05.052 [retrieved on 2011-06-03]**

(52) Cooperative Patent Classification (CPC): (Cont.)
B01D 2256/24; B01D 2311/02; B01D 2323/12; B01D 2323/22; B01D 2323/28; B01D 2325/34; Y02C 20/20; Y02C 20/40; Y02P 20/151

C-Sets
**C08L 79/08, C08L 63/00**

## Description

### Field of the Invention

The invention relates to polyimide membranes (PMs) to separate gases. In particular the invention relates to a use of at least one hydrocarbon having 2 to 5 carbons to improve the hydrogen selectivity of a halogen-containing polyimide membrane without any substantial reduction in hydrogen permeance.

### Background of the Invention

US 4,983,191 relates to an improved aromatic polyimide separating membrane and a process for making it. US 5,868,992 relates to a process for improving the permselectivity of polymeric gas separation membranes. US 4,880,442 relates to certain substituted aromatic polyimide separation membranes particularly useful for separating gases and the process of using them. Semenova S I, Journal of Membrane Sci, Eksevier BV, NL, vol. 231, no. 1-2, 1 March 2004, pages 189-207, XP004490575, ISSN: 0376-7388, DOI: 10.1016/J.MEMSCI.2003.11.022 relates to "polymer membranes for hydrocarbon separation and removal". Lili Cui et al, Polymer, Elsevier Science Publishers B.V, GB, vol. 52, no. 15, 26 May 2011, pages 3374-3380, XP028257737, ISSN: 0032-3861, DOI:10.1016/J.Polymer.2011.05.052 relates to "physical aging of 6FDA-based polyimide membranes monitored by gas permeability". US 5,266,100 relates to aromatic polyimide, polyamide and polyamide-imide gas separation membranes and the process for separating one or more gases from a gaseous mixture using such membranes.

Membranes are widely used for the separation of gases and liquids, including for example, separating acid gases, such as $CO_2$ and $H_2S$ from natural gas, and in particular the removal of $O_2$ from air. Gas transport through such membranes is commonly modeled by the sorption-diffusion mechanism. Polymeric membranes polyimide membranes are well known for separating gases such as those described in U.S. Patent Re. 30,351 and U.S. Pat. Nos. 4,705,540 and 4,717,394.

Polyimides as well as other polymeric membranes have incorporated solubilized small molecules to improve the selectivity of the gas separation membranes that are films or hollow fibers, but this invariably leads to a concomitant reduction in permeability or productivity (see, for example, Effect of Antiplasticization on Selectivity and Productivity of Gas Separation Membranes, Y. Maeda and D.R. Paul, J. Mem. Sci., 30 (1987) 1-9 and U.S. Pat. No. 4,983,191).

It would be desirable to provide a method to make a polyimide membrane that avoids the aforementioned problem. Likewise it would be desirable to provide a polyimide membrane that is able to viably separate other gases and in particular smaller gas molecules (e.g., hydrogen from methane, ethane, ethylene, propylene or propane).

### Summary of the Invention

A first aspect of the invention is a use of at least one hydrocarbon having from 2 to 5 carbons to improve the hydrogen selectivity of a halogen-containing polyimide membrane without any substantial reduction in hydrogen permeance, the use comprising,

(i) providing a dope solution comprised of a polyimide, a halogen containing compound that is soluble in the polyimide and a solvent;
(ii) shaping the dope solution to form an initial shaped membrane;
(iii) removing the solvent from the initial shaped membrane to form an untreated polyimide membrane; and
(iv) exposing the untreated polyimide membrane to a treating atmosphere comprising at least one of a hydrocarbon having 2 to 5 carbons for a time to form the halogen-containing polyimide membrane, wherein the exposing is for a time of at least 4 hours to 4 days;

wherein the halogen containing compound is an aromatic epoxide.

The use of the invention may realize a polyimide gas separation membrane with an improved combination of selectivity and permeance. Illustratively, the use allows for a polyimide membrane having good selectivity for similar sized gas molecules (e.g., hydrogen/ethylene) while still having high permeance of the target permeate gas molecule (e.g., hydrogen). That is, the selectivity is substantially improved compared to a polyimide membrane that has not been exposed to the treating atmosphere with hardly any loss in permeance of the hydrogen.

There is also disclosed a process for separating a gas molecule from a gas feed comprised of the gas molecule and at least one other gas molecule comprising

(i) providing the halogen-containing polyimide membrane as described herein; and

(ii) flowing the gas feed through said halogen-containing polyimide membrane to produce a first stream having an increased concentration of the gas molecule and a second stream having an increased concentration of the other gas molecule.

There is also disclosed a gas separating module comprising a sealable enclosure comprised of: a plurality of polyimide membranes, comprising at least one halogen-containing polyimide membrane as described herein, contained within the sealable enclosure; an inlet for introducing a gas feed comprised of at least two differing gas molecules; a first outlet for permitting egress of a permeate gas stream; and a second outlet for egress of a retentate gas stream.

There is also disclosed a halogen-containing polyimide membrane comprised of a polyimide, a halogen compound that is solubilized in the polyimide and a hydrocarbon having 2 to 5 carbons in the halogen-containing polyimide membrane.

The gas separation method is particularly useful for separating gas molecules in gas feeds that have very similar molecular sizes such as hydrogen/ethylene, ethane/ethylene and propane/propylene. It may also be used to separate gases from atmospheric air such as oxygen or separating gases (e.g., methane) in natural gas feeds.

## Detailed Description of the Invention

The halogen-containing polyimide membrane for separating gases may be in any useful form such as a thin film or asymmetric membrane and in particular a hollow fiber having a thin dense layer on the outer surface of the fiber and a wider larger microporous/mesoporous/macroporous layer on the inner surface of the fiber. Desirably, the hollow fibers are substantially defect-free. "Defect-free" means that selectivity of a gas pair, typically oxygen ($O_2$) and nitrogen ($N_2$), through a hollow fiber membrane is at least 90 percent of the selectivity for the same gas pair through a dense film prepared from the same composition as that used to make the polymeric precursor hollow fiber membrane. By way of illustration, a 6FDA/BPDA(1:1)-DAM polymer has an intrinsic $O_2/N_2$ selectivity (also known as "dense film selectivity") of 4.1.

When making the membrane, conventional procedures known in the art may be used (see, for example U.S. Pat. Nos. 5,820,659; 4,113,628; 4,378,324; 4,460,526; 4,474,662; 4,485,056; 4,512,893 and 4,717,394). Exemplary methods include coextrusion procedures including such as a dry-jet wet spinning process (in which an air gap exists between the tip of the spinneret and the coagulation or quench bath) or a wet spinning process (with zero air-gap distance) may be used to make the hollow fibers.

To make the polyimide membrane a dope solution is used comprised of a polyimide, halogen compound and solvents. Typically, when making a thin film membrane a dope solution comprised of a solvent that dissolves the polyimide is used, for example, when casting onto a flat plate and the solvent removed. When making a hollow fiber, typically a dope solution that is a mixture of a solvent that solubilizes the polyimide and a second solvent that does not solubilize (or to a limited extent solubilizes) the polyimide, but is soluble with the solvent that solubilizes the polyimide are used. Exemplary solvents that are useful to solubilize the polyimide include N-Methyl-2-pyrrolidone (NMP), tetrahydrofuran (THF), dimethylacetamide (DMAc) and dimethylformamide (DMF). Exemplary solvents that do not solubilize the polyimide, but are soluble with the solvents that do solubilize the polyimide include methanol, ethanol, water, and 1-propanol.

2The polyimide may be any polyimide such as the aromatic polyimides described by U.S. Pat. No. 4,983,191 from col. 2, line 65 to col. 5, line 28. Other aromatic polyimides that may be used are described by U.S. Pat. Nos. 4,717,394; 4,705,540; and re30351. Desirable polyimides typically contain at least two different moieties selected from 2,4,6-trimethyl-1,3-phenylene diamine (DAM), oxydianaline (ODA), dimethyl-3,7-diaminodiphenyl-thiophene-5,5'-dioxide (DDBT), 3,5-diaminobenzoic acide (DABA), 2.3,5,6-tetramethyl-1,4-phenylene diamine (durene), meta-phenylenediamine (m-PDA), 2,4-diaminotolune (2,4-DAT), tetramethylmethylenedianaline (TMMDA), 4,4'-diamino 2,2'-biphenyl disulfonic acid (BDSA); 5,5'-[2,2,2-trifluoro-1-(trifluoromethyl)ethylidene]-1,3-isobenzofurandion (6FDA), 3,3',4,4'-biphenyl tetracarboxylic dianhydride (BPDA), pyromellitic dianhydride (PMDA), 1,4,5,8-naphthalene tetracarboxylic dianhydride (NTDA), and benzophenone tetracarboxylic dianhydride (BTDA), with two or more of 6FDA, BPDA and DAM being preferred.

A particularly useful polyimide, designated as 6FDA/BPDA-DAM, may be synthesized via thermal or chemical processes from a combination of three monomers: DAM; 6FDA, and BPDA, each commercially available for example from Sigma-Aldrich Corporation. Formula 1 below shows a representative structure for 6FDA/BPDA-DAM, with a potential for adjusting the ratio between X and Y to tune polymer properties. As used in examples below, a 1:1 ratio of component X and component Y may also abbreviated as 6FDA/BPDA(1:1)-DAM.

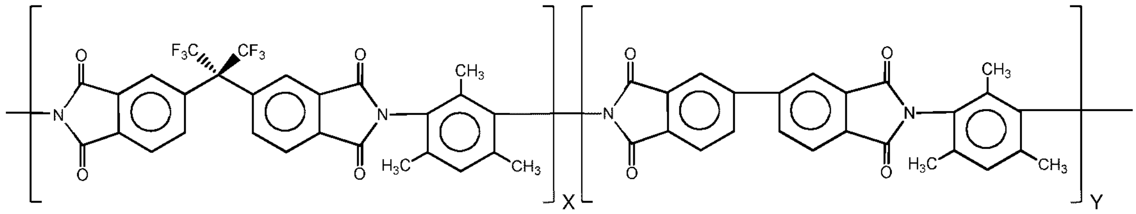

Formula 1. Chemical structure of 6FDA/BPDA-DAM

A second particularly useful polyimide, designated as 6FDA-DAM, lacks BPDA such that Y equals zero in Formula 1 above. Formula 2 below shows a representative structure for this polyimide.

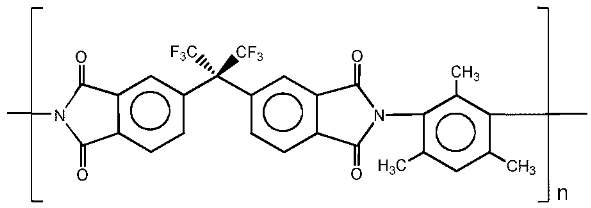

Formula 2. Chemical structure of 6FDA-DAM

A third useful polyimide is MATRIMID™ 5218 (Huntsman Advanced Materials), a commercially available polyimide that is a copolymer of 3,3',4,4'-benzophenonetetracarboxylic acid dianhydride and 5(6)-amino-1-(4'-aminophenyl)-1,3,3-trimethylindane (BTDA-DAPI).

It should be noted, that the polyimide may be provided as the precursor monomers in the dope solution and polymerized after shaping by application of heat if desired, which is also described in the prior art cited above, but this is not preferred.

The halogen compound is soluble in the polyimide used. Generally, this means that at least about 0.5% of the halogen compound is soluble in the polyimide. Likewise, it is understood that soluble means that the membrane that is formed has the halogen homogeneously within the formed halogen-containing polyimide membrane. The halogen compound is an aromatic epoxide. Preferably, the halogen compound has at least one bromine and even more preferably, all of the halogens in the halogen compound are bromines. Generally, the aromatic epoxide has a molecular weight from 50 to 50,000, but desirably the molecular weight is from 500 to 5000.

In a particular embodiment, the aromatic epoxide is an oligomeric or polymeric residue having at least one halogen substituent represented by:

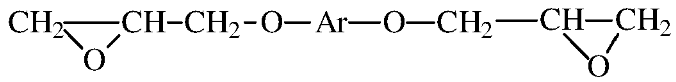

where Ar represents a divalent aromatic group of the form:

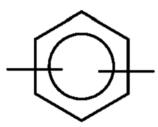 , 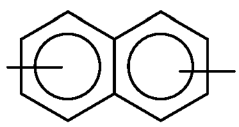 , 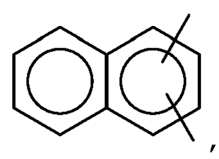 ,

or

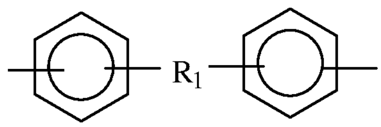

where $R_1$ is a direct bond or anyone of the following divalent radicals:

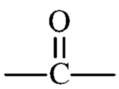, 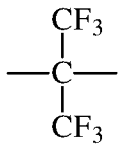, 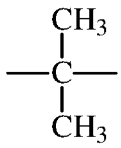, 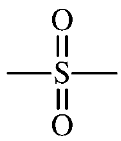, 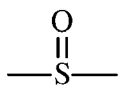, 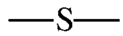, 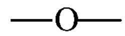,

or

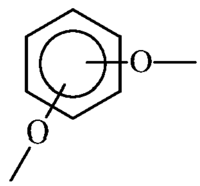

Desirably Ar is substituted with at least one halogen and preferably more than one halogen with it being most desirable for the halogen to be bromine. In a particular embodiment, each aromatic ring of the aromatic epoxide is substituted with a halogen ortho to the glycidyl ether end groups of the aforementioned. A particular aromatic epoxide is an oligomer or polymer having repeating units represented by:

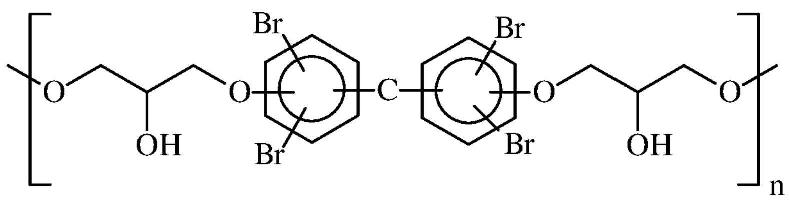

The value of n may be any value, but generally is a value that realizes the aforementioned molecular weight for the aromatic epoxide described above.

After the dope solution is formed, the solution is shaped into a membrane as described above. After shaping, the solvents are removed by any convenient method such as application of heat, vacuum, flowing gases or combination thereof and include those known in the art.

After removing the solvent, the formed or untreated membrane is exposed to a treating atmosphere to a treating atmosphere comprising a hydrocarbon having 2 to 5 carbons for a time sufficient to make the halogen-containing polyimide membrane. The time may vary depending on the particular hydrocarbon, polyimide or halogen compound used and the amount of halogen compound used. The halogen-containing polyimide membranes when being exposed do not need to be fabricated into a separation module (apparatus capable of flowing gas through the polyimide membrane), but may, for example, merely be exposed to the treating atmosphere in a vessel.

The treating atmosphere, during the exposing, may be static, flowing or combination thereof during the exposing. Desirably, the treating atmosphere is flowing at least a portion of the time during the exposing and preferably is flowing the entire time of the exposing.

In an embodiment, at least a portion of the gas within the conditioning atmosphere flows through the polyimide membrane walls.

The pressure of the conditioning atmosphere may be any useful and may range from a pressure below atmospheric pressure to several hundred pounds per square inch (psi) or more. Desirably, the pressure is from about 68.9 to 2,058 kPa (10 to 300 psi). The pressure may also be varied during the exposing. When exposing the membrane, where at least a portion of the gas in the conditioning atmosphere flows through the walls of the hollow fiber membrane, the pressure differential across the wall may be any useful such as several psi to several hundred psi. Desirably, the pressure differential is from about 6.9, 34.5, or 68.9 to 172.4, 344.7 or 689.5 kPa (1, 5 or 10 to 25, 50 or 100 psi).

The time of exposing is from at least 4 hours to 4, 3 or 2 days.

The treating atmosphere is comprised of a hydrocarbon having 2 to 5 carbons. Typically, the hydrocarbon is an alkane or alkene, which generally is linear. Preferably, the hydrocarbon is an alkene. Exemplary hydrocarbons include ethane, ethylene, propane, propylene, butane, butylene or mixture thereof. Illustratively, the conditioning atmosphere desirably is comprised of at least a majority of the hydrocarbon. Preferably, the conditioning atmosphere is comprised of at least 75%, 90%, 99% or even essentially 100% of the hydrocarbon. When using a conditioning atmosphere having less than 99% of the permeate molecule, it is desirable that the other gas molecules in the conditioning atmosphere are

smaller than the hydrocarbon such as hydrogen.

The gas permeation properties of a membrane can be determined by gas permeation experiments. Two intrinsic properties have utility in evaluating separation performance of a membrane material: its "permeability," a measure of the membrane's intrinsic productivity; and its "selectivity," a measure of the membrane's separation efficiency. One typically determines "permeability" in Barrer (1 Barrer=$10^{-10}$ [$cm^3$ (STP) cm]/[$cm^2$ s cmHg], calculated as the flux ($n_i$) divided by the partial pressure difference between the membrane upstream and downstream ($\Delta p_i$), and multiplied by the thickness of the membrane ($l$) .

$$P_i = \frac{n_i\, l}{\Delta p_i}$$

Another term, "permeance," is defined herein as productivity of asymmetric hollow fiber membranes and is typically measured in Gas Permeation Units (GPU) (1 GPU=$10^{-6}$ [$cm^3$ (STP)]/[$cm^2$ s cmHg]), determined by dividing permeability by effective membrane separation layer thickness.

$$\left(\frac{P_i}{l}\right) = \frac{n_i}{\Delta p_i}$$

Finally, "selectivity" is defined herein as the ability of one gas's permeability through the membrane or permeance relative to the same property of another gas. It is measured as a unitless ratio.

$$\propto_{i/j} = \frac{P_i}{P_j} = \frac{\left(P_i/_l\right)}{\left(P_j/_l\right)}$$

In a particular embodiment the use creates a halogen-containing polyimide membrane comprised of a polyimide, a halogen compound that is soluble in the polyimide and a hydrocarbon having 2 to 5 carbons. Generally, the halogen compound is homogeneously distributed within the polyimide throughout the membrane. The hydrocarbon may be adsorbed, or solubilized into the polyimide or combination thereof. Surprisingly, the halogen-containing polyimide membrane may substantially improve, for example, the selectivity of hydrogen in a hydrogen/ethylene gas mixture without any substantial reduction in the hydrogen permeance, whereas the same polyimide in the absence of the halogen compound does not. In a particular embodiment, the halogen-containing polyimide membrane has a selectivity of hydrogen of at least 40 from a hydrogen/ethylene gas mixture and a hydrogen permeance of at least 250 GPU at 35°C. Preferably, the halogen-containing polyimide membrane has a selectivity of hydrogen of at least 50 from a hydrogen/ethylene gas mixture and a hydrogen permeance of at least 300 GPU at 35°C.

The halogen-containing polyimide membranes are particularly suitable for separating gases that are similar in sizes such as described above and involve flowing a gas feed containing a desired gas molecule and at least one other gas molecule through the membrane. The flowing results in a first stream that has an increased concentration of the desired gas molecule and second stream that has an increased concentration of the other gas molecule. The process may be utilized to separate any number of gas pairs and in particular is suitable for separating hydrogen from ethylene, ethane, propylene, propylene or mixture thereof or hydrogen from any low molecular weight hydrocarbon, nitrogen, oxygen, $CO_2$ or air. When practicing the process, the membrane is desirably fabricated into a module comprising a sealable enclosure comprised of a plurality of polyimide membranes that is comprised of at least one polyimide membrane produced by the method of the invention that are contained within the sealable enclosure. The sealable enclosure having an inlet for introducing a gas feed comprised of at least two differing gas molecules; a first outlet for permitting egress of a permeate gas stream; and a second outlet for egress of a retentate gas stream.

## EXAMPLES

*Polyimide Membrane Preparation without Halogen (PM):*

The membranes were made using 6FDA:BPDA-DAM polymer. The 6FDA:BPDA-DAM was acquired from Akron Polymer Systems, Akron, OH. The polymer was dried under vacuum at 110°C for 24 hours and then a dope was formed. The dope was made by mixing the 6FDA:BPDA-DAM polymer with solvents and compounds in Table 1 and roll mixed

in a Qorpak™ glass bottle sealed with a polytetrafluoroethylene (TEFLON™) cap and a rolling speed of 5 revolutions per minute (rpm) for a period of about 3 weeks to form a homogeneous dope.

Table 1: Comparative Example 1 Dope formulation

| Dope Composition | | |
|---|---|---|
| Component | wt % | Mass (g) |
| 6FDA/BPDA-DAM | 25 | 50 |
| NMP | 43 | 86 |
| THF | 10 | 20 |
| EtOH | 22 | 44 |
| Total | 100 | 200 |
| NMP = N-Methyl-2-pyrrolidone ; THF = Tetrahydrofuran; EtOH=Ethanol | | |

The homogeneous dope was loaded into a 500 milliliter (mL) syringe pump and the dope was allowed to degas overnight by heating the pump to a set point temperature of 50 °C using a heating tape.

Bore fluid (80 wt% NMP and 20 wt% water, based on total bore fluid weight) was loaded into a separate 100 mL syringe pump and then the dope and bore fluid were coextruded through a spinneret operating at a flow rate of 100 milliliters per hour (mL/hr) for the dope; 100 mL/hr bore fluid, filtering both the bore fluid and the dope in line between delivery pumps and the spinneret using 40 μm and 2 μm metal filters. The temperature was controlled using thermocouples and heating tape placed on the spinneret, dope filters and dope pump at a set point temperature of 70 °C.

After passing through a two centimeter (cm) air gap, the nascent fibers that were formed by the spinneret were quenched in a water bath (50°C) and the fibers were allowed to phase separate. The fibers were collected using a 0.32 meter (M) diameter polyethylene drum passing over TEFLON guides and operating at a take-up rate of 5 meters per minute (M/min).

The fibers were cut from the drum and rinsed at least four times in separate water baths over a span of 48 hours. The rinsed fibers were placed in containers and solvent exchanged three times with methanol for 20 minutes and then hexane for 20 minutes before recovering the fibers and drying them under UHP argon purge at a set point temperature of 100°C for two hour to form the polyimide membranes.

Halogen-containing Polyimide Membrane (HCPM) *Preparation:*

The same above procedure was followed except that the dope solution composition was as shown in Table 2 and the spinning conditions were as listed below. F-2016 (catalog number) is a brominated epoxy oligomer having a molecular weight of 1600 available from ICL Industrial Products (Beer Sheva, Israel). The structure of F-2016 is shown below where n is approximately 2.7.

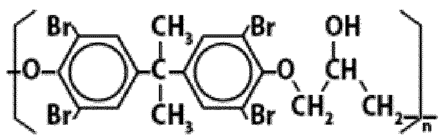

The spinning temperature, quench bath temperature and the air gap were set at 50 °C, 35 °C, and 15 centimeters, respectively.

Table 2: Example 1 Dope formulation

| Dope Composition | | |
|---|---|---|
| Component | wt % | Mass (g) |
| 6FDA/BPDA-DAM | 22 | 44 |
| F-2016 | 4.4 | 8.8 |
| NMP | 43.6 | 87.2 |

(continued)

| Dope Composition | | |
|---|---|---|
| Component | wt % | Mass (g) |
| THF | 10 | 20 |
| EtOH | 20 | 40 |
| Total | 100 | 200 |

*Testing and Gaseous Exposure of the Membranes:*

One or more hollow fibers were potted into a 0.64 cm (¼ inch) (outside diameter, OD) stainless steel tubing. Each tubing end was connected to a 0.64 cm (¼ inch) stainless steel tee; and each tee was connected to 0.64 cm (¼ inch) female and male NPT tube adapters, which were sealed to NPT connections with epoxy. An Argon sweep gas was used as sweep gas in the permeate side. The flow rate of the combined sweep gas and permeate gas was measured by a Bios Drycal flowmeter, while the composition was measured by gas chromatography. The flow rate and composition were then used for calculating gas permeance. The selectivity of each gas pair as a ratio of the individual gas permeance was calculated. The gas permeation was tested in a constant pressure permeation system maintained at 35 °C, and the feed and permeate/sweep pressures were kept at 358.5 and 13.8 kPa (52 and 2 psig), respectively, if not noted specifically. The $CO_2/N_2$ (10 mol%/90 mol%) feed gas was pre-mixed and supplied by Airgas. The $H_2/C_2H_4$ mixture feed gas was mixed using mass flow controllers. Retentate flow was set to keep the stage cut (ratio of permeate to feed flow rate) below 1%.

Example 1

The HCPM fiber was exposed to a gas containing 50% ethylene and 50% hydrogen as described above with the hydrogen permeance shown in Fig. 1 and the hydrogen selectivity shown in Fig. 2 over time as the membrane was exposed to the ethylene.

Comparative Example 1

Example 1 was repeated except that the PM fiber was used. Figures 3 and 4 show the hydrogen permeance and the $H_2/C_2H_4$ selectivity over time as the membrane was exposed to the ethylene.

From the graphs (Figs. 1-4) it is readily apparent that the hydrogen (permeate) permeance of the HCPM fiber is essentially stable and flat, whereas the selectivity of the membrane substantially increases with time exposed to the ethylene. This is in contrast to the PM fiber, where the hydrogen permeance is stable, but the selectivity stays relatively the same and both the hydrogen permeance and selectivity are substantially lower than for the HCPM.

Example 2:

In this Example, prior to exposing the HCPM fiber a baseline hydrogen permeance and selectivity of hydrogen/nitrogen gas mixture was first performed. The gas mixtures were all 50%/50% by mole mixtures with same exposure testing criteria described above. After the baseline was established ~2.2 hours of exposure/testing, the fiber was then exposed to a hydrogen/ethane gas mixture for 2 hours followed by exposing the fiber to a hydrogen/ethylene mixture for 66.2 hours. Afterwards, the hydrogen permeance in nitrogen and ethane were again determined.

From the results shown in Table 3, it is readily apparent that the HCPM after being exposed to the ethane and ethylene has not decreased the hydrogen permeance and the selectivity is improved in both the hydrogen/nitrogen and hydrogen/ethane gas mixtures.

Table 3:

| Gas exposure step | Gas A | Gas B | Gas A (GPU) | Gas B (GPU) | Gas A Selectivity | Gas Exposure Time (hour) |
|---|---|---|---|---|---|---|
| 1 | $H_2$ | $N_2$ | 278 | 6.3 | 44.4 | 2.2 |
| 2 | $H_2$ | $C_2H_6$ | 265 | 0.94 | 281.4 | 2.0 |
| 3 | $H_2$ | $C_2H_4$ | 256 | 4.2 | 61.1 | 66.2 |

(continued)

| Gas exposure step | Gas A | Gas B | Gas A (GPU) | Gas B (GPU) | Gas A Selectivity | Gas Exposure Time (hour) |
|---|---|---|---|---|---|---|
| 4 | $H_2$ | $N_2$ | 278 | 5.1 | 54.2 | 2.8 |
| 5 | $H_2$ | $C_2H_6$ | 262 | 0.7 | 372.9 | 2.4 |

Example 3

In this Example, prior to exposing the HCPM fiber to a hydrocarbon having 2 to 5 carbons a baseline carbon dioxide permeance and selectivity of carbon dioxide/nitrogen gas mixture was first performed followed by a baseline for a carbon dioxide/methane gas mixture. The gas mixtures were all 50%/50% by mole mixtures with same exposure testing criteria described above. After the baselines were established, the fiber was then exposed to a hydrogen/ethylene gas mixture for 68.4 hours. Afterwards, the carbon dioxide permeance in methane and nitrogen was again determined.

From the results shown in Table 4, it is readily apparent that the HCPM after being exposed to the ethylene has decreased the carbon dioxide permeance somewhat yet improved its selectivity in carbon dioxide/nitrogen and carbon dioxide/methane gas mixtures.

Table 4:

| Gas Exposure Step | Gas A | Gas B | Gas A (GPU) | Gas B (GPU) | Gas A Selectivity | Gas Exposure time (hours) |
|---|---|---|---|---|---|---|
| 1 | $CO_2$ | $N_2$ | 128 | 5.6 | 22.9 | 3.2 |
| 2 | $CO_2$ | $CH_4$ | 121 | 3.6 | 33.3 | 6.0 |
| 3 | $H_2$ | $C_2H_4$ | 276 | 4 | 68.7 | 68.4 |
| 4 | $CO_2$ | $CH_4$ | 97 | 2.6 | 37.3 | 4.0 |
| 5 | $CO_2$ | $N_2$ | 95 | 3.9 | 24.3 | 7.6 |

## Claims

**1.** Use of at least one hydrocarbon having 2 to 5 carbons to improve the hydrogen selectivity of a halogen-containing polyimide membrane without any substantial reduction in hydrogen permeance, the use comprising,

(i) providing a dope solution comprised of a polyimide, a halogen containing compound that is soluble in the polyimide, and a solvent;
(ii) shaping the dope solution to form an initial shaped membrane;
(iii) removing the solvent from the initial shaped membrane to form an untreated polyimide membrane; and
(iv) exposing the untreated polyimide membrane to a treating atmosphere comprising at least one of a hydrocarbon having 2 to 5 carbons for a time to form the halogen-containing polyimide membrane, wherein the exposing is for a time of at least 4 hours to 4 days;

wherein the halogen containing compound is an aromatic epoxide.

**2.** The use of Claim 1, wherein the treating atmosphere further comprises hydrogen.

**3.** The use of Claim 1 or Claim 2, wherein the hydrocarbon is an alkene.

**4.** The use of Claim 1 or Claim 2, wherein the hydrocarbon is ethane, ethylene, propane, propylene, butane, butylene or mixture thereof.

**5.** The use of any one of the preceding claims, wherein the treating atmosphere is comprised of at least 99% of the hydrocarbon.

**6.** The use of any one of the preceding Claims, wherein the halogen is bromine.

**7.** The use of any one of the preceding Claims, wherein the exposing is for a time of from 2 days to 4 days.

## Patentansprüche

1. Verwendung mindestens eines Kohlenwasserstoffs, das 2 bis 5 Kohlenstoffe aufweist, um die Wasserstoffselektivität einer halogenhaltigen Polyimidmembran ohne wesentliche Verringerung der Wasserstoffdurchlässigkeit zu verbessern, die Verwendung umfassend,

   (i) Bereitstellen einer Dotierlösung, die aus einem Polyimid, einer halogenhaltigen Verbindung, die in dem Polyimid löslich ist, und einem Lösungsmittel besteht;
   (ii) Formen der Dotierlösung, um eine anfängliche geformte Membran auszubilden;
   (iii) Entfernen des Lösungsmittels aus der anfänglichen geformten Membran, um eine unbehandelte Polyimidmembran auszubilden; und
   (iv) Aussetzen der unbehandelten Polyimidmembran einer Behandlungsatmosphäre, umfassend mindestens einen von einem Kohlenwasserstoff, das 2 bis 5 Kohlenstoffe aufweist, für eine Zeit, um die halogenhaltige Polyimidmembran auszubilden, wobei das Aussetzen für eine Zeit von mindestens 4 Stunden bis 4 Tagen erfolgt;

   wobei die halogenhaltige Verbindung ein aromatisches Epoxid ist.

2. Verwendung nach Anspruch 1, wobei die Behandlungsatmosphäre ferner Wasserstoff umfasst.

3. Verwendung nach Anspruch 1 oder 2, wobei der Kohlenwasserstoff ein Alken ist.

4. Verwendung nach Anspruch 1 oder 2, wobei der Kohlenwasserstoff Ethan, Ethylen, Propan, Propylen, Butan, Butylen oder eine Mischung davon ist.

5. Verwendung nach einem der vorstehenden Ansprüche, wobei die Behandlungsatmosphäre aus mindestens 99 % des Kohlenwasserstoffs besteht.

6. Verwendung nach einem der vorstehenden Ansprüche, wobei das Halogen Brom ist.

7. Verwendung nach einem der vorstehenden Ansprüche, wobei das Aussetzen für eine Zeit von 2 Tage bis 4 Tage erfolgt.

## Revendications

1. Utilisation d’au moins un hydrocarbure ayant 2 à 5 carbones pour l’amélioration de la sélectivité en hydrogène d’une membrane de polyimide à teneur en halogène sans réduction sensible de la perméance à l’hydrogène, l’utilisation comprenant,

   (i) la fourniture d’une solution de dopage composée d’un polyimide, d’un composé à teneur en halogène qui est soluble dans le polyimide, et d’un solvant ;
   (ii) la mise en forme de la solution de dopage afin de former une membrane formée initiale ;
   (iii) l’élimination du solvant de la membrane formée initiale afin de former une membrane de polyimide non traitée ; et
   (iv) l’exposition de la membrane de polyimide non traitée à une atmosphère de traitement comprenant au moins l’un parmi un hydrocarbure ayant 2 à 5 carbones pendant une durée pour former la membrane de polyimide à teneur en halogène, dans laquelle l’exposition se fait pendant une durée d’au moins 4 heures à 4 jours ;

   dans laquelle le composé à teneur en halogène est un époxyde aromatique.

2. Utilisation selon la revendication 1, dans laquelle l’atmosphère de traitement comprend en outre de l’hydrogène.

3. Utilisation selon la revendication 1 ou la revendication 2, dans laquelle l’hydrocarbure est un alcène.

4. Utilisation selon la revendication 1 ou la revendication 2, dans laquelle l’hydrocarbure est l’éthane, l’éthylène, le propane, le propylène, le butane, le butylène ou des mélanges de ceux-ci.

5. Utilisation selon l’une quelconque des revendications précédentes, dans laquelle l’atmosphère de traitement est

composée d'au moins 99 % de l'hydrocarbure.

6. Utilisation selon l'une quelconque des revendications précédentes, dans laquelle l'halogène est le brome.

7. Utilisation selon l'une quelconque des revendications précédentes, dans laquelle l'exposition se fait pendant une durée allant de 2 jours à 4 jours.

Fig. 1

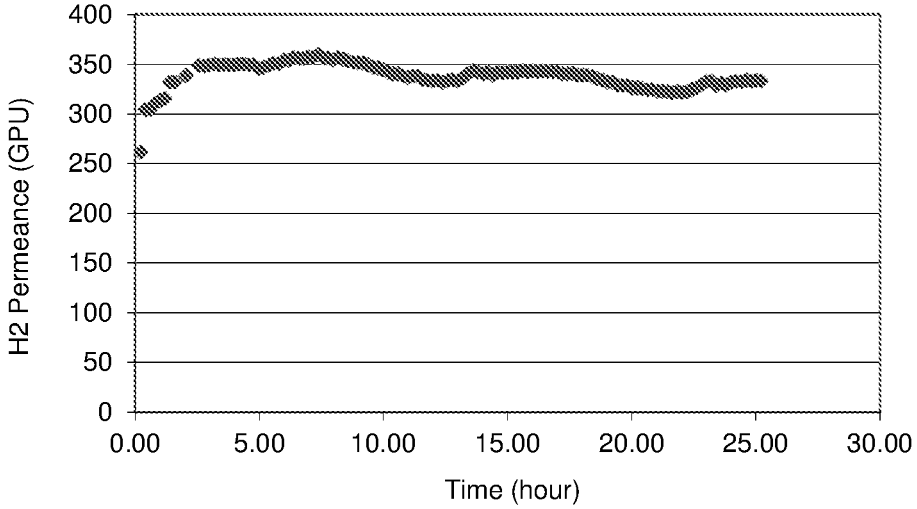
400
350
300
250
200
150
100
50
0
H2 Permeance (GPU)
0.00
5.00
10.00
15.00
20.00
25.00
30.00
Time (hour)

Fig. 2

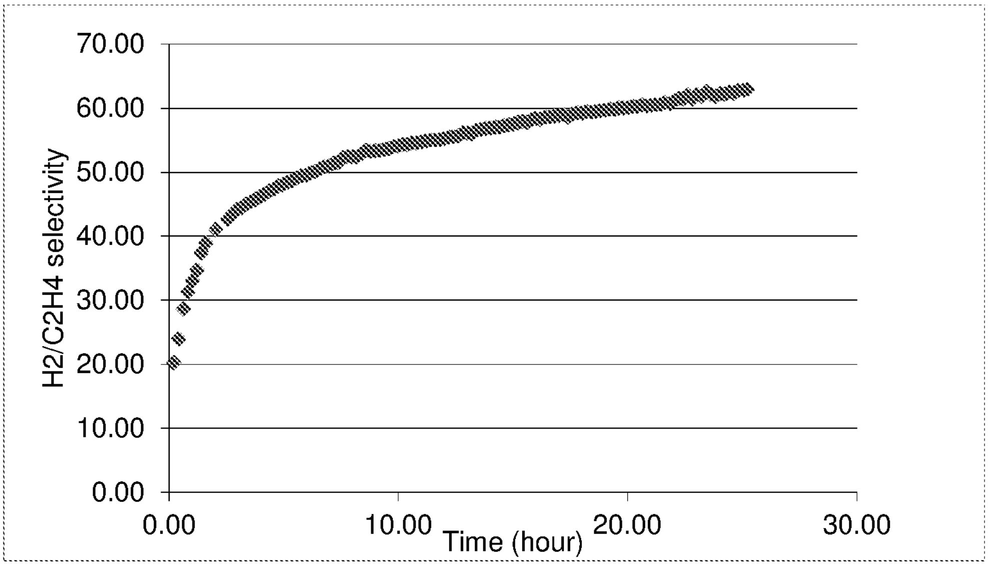
70.00
60.00
50.00
40.00
30.00
20.00
10.00
0.00
H2/C2H4 selectivity
0.00
10.00
20.00
30.00
Time (hour)

Fig. 3

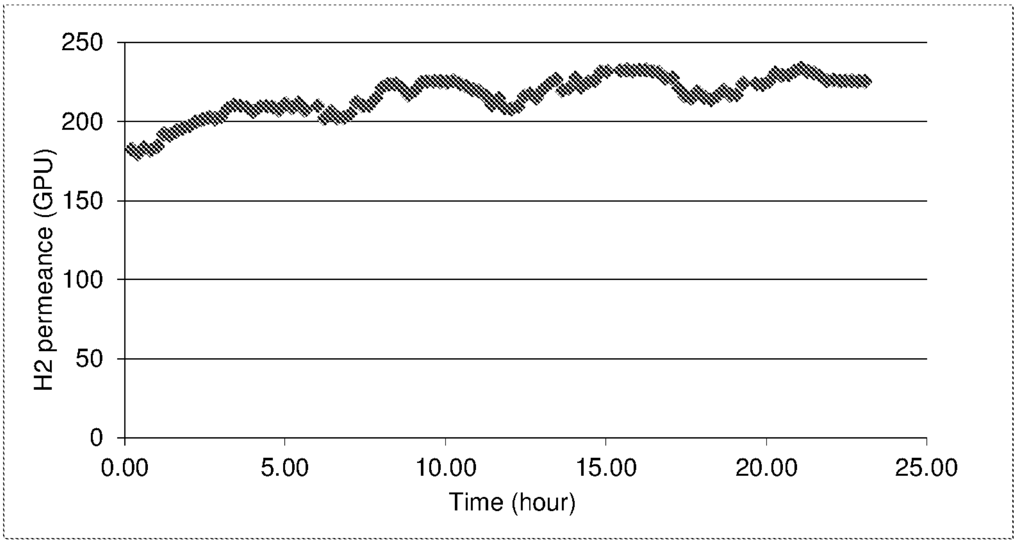
250
200
150
100
50
0
H2 permeance (GPU)
0.00
5.00
10.00
15.00
20.00
25.00
Time (hour)

Fig. 4

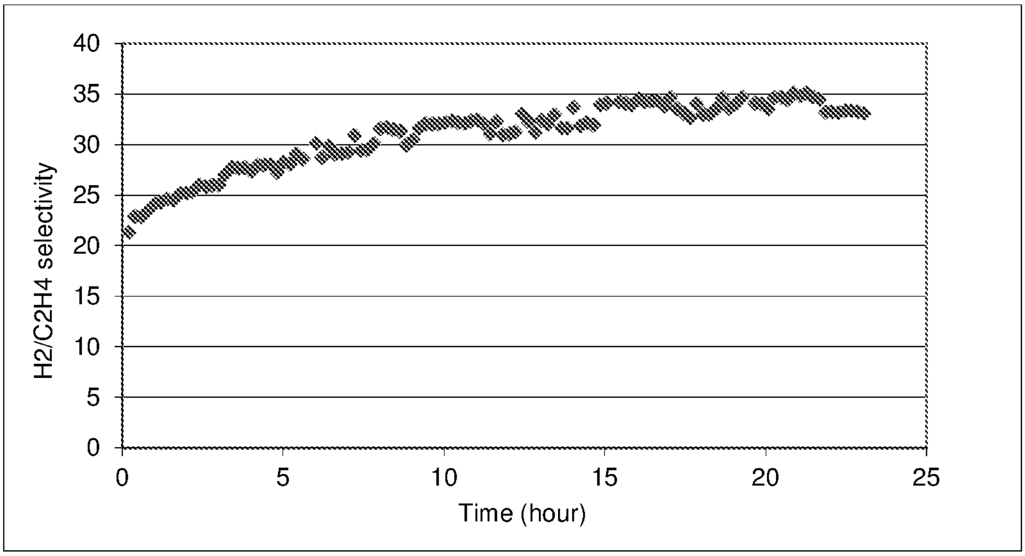
H2/C2H4 selectivity
40
35
30
25
20
15
10
5
0
0
5
10
15
20
25
Time (hour)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4983191 A
- US 5868992 A
- US 4880442 A
- US 5266100 A
- US RE30351 E
- US 4705540 A
- US 4717394 A
- US 5820659 A
- US 4113628 A
- US 4378324 A
- US 4460526 A
- US 4474662 A
- US 4485056 A
- US 4512893 A


### Non-patent literature cited in the description


- **SEMENOVA S I.** *Journal of Membrane Sci, Eksevier BV, NL,* 01 March 2004, vol. 231 (1-2), 189-207
- **LILI CUI et al.** Polymer. Elsevier Science Publishers, 26 May 2011, vol. 52, 3374-3380
- **Y. MAEDA ; D.R. PAUL.** *J. Mem. Sci.,* 1987, vol. 30, 1-9